# EUROPÄISCHE PATENTANMELDUNG

(11) **EP 0 595 292 A1**
(43) Veröffentlichungstag der Anmeldung: **04.05.1994**
(21) Anmeldenummer: 93117401.5
(22) Anmeldetag: 27.10.1993
(51) Int. Cl.: F22B 1/28, D06F 75/12

(54) **Kombinierbarer Dampferzeuger**

(30) Priorität: 28.10.1992 DE 9214577 U
(71) Anmelder: Planeta Hausgeräte GmbH & Co. Elektrotechnik KG, D-87719 Mindelheim (DE)
(72) Erfinder: Mayer, Herbert, D-87700 Memmingen (DE)
(74) Vertreter: Riebling, Peter, Dr.-Ing., Patentanwalt

(57) **Zusammenfassung**

Kombinierbares Dampferzeugungsgerät, vorzugsweise für Bügeleinrichtungen und Reinigungsgeräte, für den professionellen und nicht professionellen Gebrauch mit einem Druckkessel mit einem ein- oder angebauten Heizelement, einer Nachfülleinrichtung, einer Unterdrucksicherung, einer Ablaßeinrichtung einem Einstellventil für den austretenden Dampfstrom und mit einer Überdrucksicherung, wobei das Heizelement eine spezielle Widerstands-Temperatur-Charakteristik aufweist, die dem Dampferzeugungsgerät selbstregelnde Eigenschaften verleiht, die den Druck und die Temperatur des erzeugten Dampfes weitgehend unabhängig von der abschließenden Dampfmenge, von der Temperatur des zugeführten Wassers und von der Versorgungsspannung des Heizelementes erhalten, und daß am Damperzeugungsgerät eine oder mehrere Befestigungseinrichtungen vorgesehen sind.

## Beschreibung

Die Neuerung betrifft einen kombinierbaren Dampferzeuger mit den Merkmalen des Oberbegriffes von Anspruch 1.

Derartige Dampferzeuger sind bekannt. Die Heizelemente haben eine herkömmliche Charakteristik.

Bekannte Dampferzeuger dieser Art haben entweder ein relativ großes Kesselvolumen, um ohne Nachfüllung über eine durchschnittlich lange Arbeitsperiode Dampf zu liefern oder sie erfordern bei kleinem Kesselvolumen eine Nachfüllung in kürzeren Zeitabständen. Größere Kessel erfordern eine größere Masse und ein größeres Volumen des gesamten Dampferzeugers, kleinere Kessel mit kürzeren Nachfüllperioden erfordern zusätzliche Nachfüllpausen, einen höheren Bedienungsaufwand und bergen eine Unfallgefahr beim notwendigen Drucklosmachen des Kessels vor dem Nachfüllen.

Des weiteren wird nach einer relativ kurzen Betriebszeit die Funktionsfähigkeit durch Ablagerungen von den im Speisewasser enthaltenen Fremdstoffen, wie Kalk und andere Mineralien, eingeschränkt, sofern die Innenräume nicht regelmäßig gründlich gereinigt werden oder extrem sauberes bzw. entmineralisiertes Wasser verwendet wird. Eine regelmäßige wirksame Reinigung ist aufwendig und kann zur Vermeidung von Unfallgefahren nur in kaltem Zustand und nach längeren Arbeitspausen durchgeführt werden.

Ein weiterer Nachteil besteht darin, daß diese Dampferzeuger keinen automatischen Unterdruckausgleich besitzen. Unterdruck entsteht u.a. dadurch, daß das Medium beim Abkühlen durch die Aggregatszustandsänderung ein wesentlich kleineres Volumen einnimmt. Durch den Unterdruck entstehen zusätzlich zu den Druckbeanspruchungen erhebliche Materialwechselbeanspruchungen. Diese können die Zerstörung von Dichtungen, Undichtigkeiten an anderen Bauteilen und eine allgemeine Materialermüdung zur Folge haben.

Andere Dampferzeuger arbeiten nach dem Durchlauferhitzerprinzip, das für diesen Einsatzzweck ungeeignet ist, weil nicht ständig Dampf zur Verfügung steht. Das Wasser, das in einem solchen Durchlauferhitzer befördert wird, verdampft nur zum Teil und reißt die mit einem Dampfschild isolierten Wassserperlen mit. Das Ergebnis ist ein druch die Aggregatszustandsänderung gewonnener Dampf, der mit geringem Druck und geringem Volumen große Mengen Wasser mit sich führt.

Um diese Nachteile der Dampferzeugung ausgleichen zu können, waren herkömmliche Dampferzeuger groß, schwer und schlecht handhabbar. Ein Einsatz im nichtprofessionellen Gebrauch kam deshalb kaum zustande.

Ausgehend von diesem Stand der Technik liegt der Neuerung die Aufgabe zugrunde, einen Dampferzeuger mit den Merkmalen des Oberbegriffs von Schutzanspruch 1 so auszugestalten, daß bei Beibehaltung der Vorteile eines relativ kleinvolumigen Kessels dessen Nachteile vermieden werden und die Handhabbarkeit verbessert wird.

Die Lösung dieser Aufgabe erfolgt durch die kennzeichnenden Merkmale von Anspruch 1.

Ein durch die Neuerung erreichter Vorteil besteht darin, daß der Dampferzeuger, bezogen auf den zu entnehmenden Dampfstrom, einen relativ kleinen Kessel enthält. Neuerungsgemäß wird dieser Vorteil dadurch erzielt, daß die Erwärmung und Verdampfung des Kesselwassers mit einem oder mehreren Heizelementen, im dargestellten, bevorzugten Ausführungsbeispiel mit drei Heizelementen erfolgt, die eine spezielle Widerstands-Temperatur-Charakteristik besitzen. Der Widerstand der Heizelemente steigt im Arbeitsbereich mit zunehmender Temperatur extrem stark an, das bedeutet viel zugeführte Heizenergie bei kaltem Kesselwasser und wenig zugeführte Heizenergie bei erreichter Solltemperatur. Dadurch werden als weitere Vorteile kurze Anheizzeiten und eine sehr empfindliche und schnelle Regelung der zugeführten Heizenergie und damit der Temperatur von Wasser und Dampf erreicht, die damit wiederum weitgehend unabhängig von dem über das Ablaßventil abfließenden Dampfstrom ist.

Ein weiterer durch die Neurung erreichter Vorteil besteht darin, daß durch eine automatische Wassernachfüllung bei vollem Kesselbetriebsdruck zusätzliche Betriebspausen zum Nachfüllen von Wasser und zusätzlicher Bedienungsaufwand entfallen und die Unfallgefahr beim Drucklosmachen des Kessels zum Nachfüllen beseitigt wird.

Mit Hilfe der erfindungsgemäß am Gehäuse des Dampferzeugers vorgesehenen Befestigungseinrichtung kann das Gerät an verschiedenen Standpunkten befestigt werden. Es ist in einer Ausführungsform der Erfindung vorgesehen, das Gerät über Anschlußrasterungen zu fixieren. Eine selbsttätig einschnappende Verriegelung stellt sicher, daß das Gerät nicht unbeabsichtigt aus dieser Position entfernt werden kann.

In einer zweiten Ausführungsform ist vorgesehen, die Oberfläche des Gerätes so zu gestalten, daß es passend in entsprechende Aufhängungen eingelegt werden kann. Die Fixierung erfolgt über den flächigen Oberflächenkontakt. Als zusätzliche Sicherung kann ein Spanngurt vorgesehen werden.

Erfindungsgemäß ist weiter eine Ablage, entweder direkt auf der Oberseite des Gehäuses oder auf einer daran befestigten Ablageeinrichtung vorgesehen. Diese Einrichtung dient dazu, verschiedene Anschlußinstrumente, wie z.B. Bügeleisen, Fensterbürsten oder Reinigungsbürsten aufzunehmen.

Um eine leichte Beweglichkeit des Geräts zu erzielen, ist es vorgesehen, an der Unterseite eine Verschiebeeinrichtung anzubringen. Diese besteht bevorzugt aus Rollen. Es ist aber auch möglich, Gleitschienen oder ähnliche bekannte Vorrichtungen anzubringen.

In einer Weiterbildung der Erfindung ist es darüberhinaus vorgesehen, einen externen Dampfspeicher mit einer geeigneten Verbindung an den Dampferzeuger zu koppeln. Dies hat den wesentlichen Vorteil, daß der Dampferzeuger selbst nicht in unmittelbarer Nähe des Einsatzortes aufgestellt werden muß. Hierfür können z.B. Platzgründe ausschlaggebend sein. Die Verbindung zwischen dem Dampferzeuger und dem externen Tank erfolgt bevorzugt über passende Schläuche.

Das Gerät soll regelmäßig entkalkt werden. Um den Benutzer auf ein nötiges Entkalken aufmerksam zu machen, ist er vorgesehen, geeignete optische oder akustische Signale durch das Gerät zu geben.

Um die Zeitspanne zwischen den Entkalkungsvorgängen zu erhöhen, ist ein Wasserkatalysator (Filter) vorgesehen, der an einer geeigneten Stelle im Gerät eingebaut wird.

In einer Weiterbildung der Erfindung ist es vorgesehen, eine Sumpfablaßeinrichtung, bestehend aus einem Ablaßventil und einem Auffangbehälter, einzusetzen, um die Zeitintervalle zwischen den Entkalkungsvorgängen noch weiter zu erhöhen bzw. den Entkalkungsvorgang vollständig überflüssig zu machen.

Eine bevorzugte Aufführungsform der Sumpfablaßeinrichtung ist dadurch gekennzeichnet, daß das Sumpfablaßventil beim Abschalten des Dampferzeugers für eine vorbestimmte Zeit oder manuell geöffnet wird, wobei einerseits die automatische Wassernachfüllung abgeschaltet ist und andererseits im Kessel noch der Betriebsdruck vorhanden ist.

Eine weitere Ausführungsform ist dadurch gekennzeichnet, daß zusätzlich der Sumpfauffangbehälter eine auswechselbare Einlage enthält, die das austretende Sumpfwasser aufsaugt. Ferner ist das ausgetretene Sumpfwasser dadurch gekennzeichnet, daß das Sumpfwasser durch einen geeigneten auswechselbaren Filter in den Vorratsbehälter oder in das Speisenetz zurückgeführt wird.

Die Neuerung wird im folgenden anhand eines Ausführungsbeispieles näher erläutert, aus dem sich weitere wichtige Merkmale ergeben.

Es zeigen:
- Figur 1:: eine schematische Darstellung eines neuerungsgemäßen, kombinierbaren Dampfgeräts mit den zugehörigen Bauelementen;
- Figur 2:: eine schematische Darstellung des Dampferzeugers mit integrierter Ablagefläche in der Draufsicht;
- Figur 3:: eine schematische Darstellung desselben Dampferzeugers in der Seitenansicht.

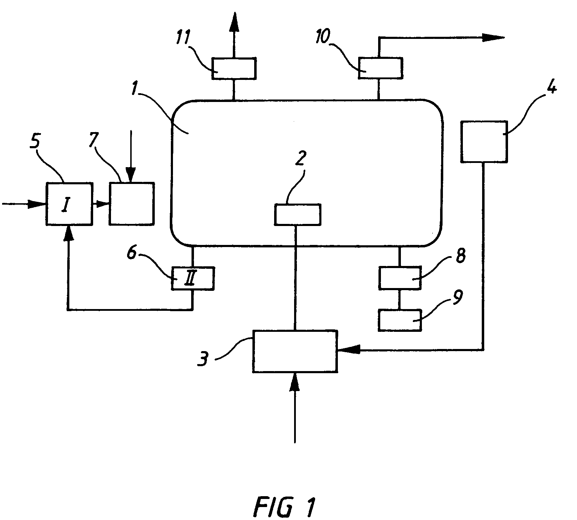

Figur 1 zeigt schematisch einen neuerungsgemäßen Dampferzeuger mit den zugehörigen Bauelementen.

Der Dampferzeuger besteht aus einem Druckkessel 1 mit einem Heizelement 2 das an den Druckkessel angebaut oder in ihn eingebaut ist. Das Heizelement hat eine spezielle Widerstands-Temperatur-Charakteristik. Außerdem ist eine Heizungssteuerung 3 vorgesehen, ein Drucksensor 4, der mit der Heizungssteuerung korrespondiert, eine Wassernachfülleinrichtung 5,6, eine Unterdrucksicherung 7, eine Ablaßeinrichtung 8,9 sowie ein Überdruckventil 11.

Die automatische Wassernachfüllung bei vollem Kesselbetriebsdruck in kurzen Zeitintervallen und mit kleinen Wassermengen wird neuerungsgemäß dadurch gelöst, daß der Füllstand des Kessels mit dem Füllstandssensor 6 ständig erfaßt wird und daß bereits bei einer kleinen negativen Abweichung des Füllstandes von seinem Sollwert bei vollem Kesselbetriebsdruck automatich eine Wassernachfüllung erfolgt. Durch das Signal des Füllstandssensors 6 wird das Nachfüllventil 5 solange geöffnet, bis der Sollfüllstand wieder erreicht ist. Eine bevorzugte Ausführungsform des Nachfüllventils ist dadurch gekennzeichnet, daß es als Druckpumpe ausgebildet ist oder aus einer Kombination von fernbetätigtem Ventil und Druckpumpe besteht. Das Speisewasser kann einem geeigneten Leitungsnetz oder einem externen drucklosen Vorratsbehälter entnommen werden.

Ferner wird ein Vorteil dadurch erreicht, daß auch unter extremen Betriebsbedingungen z.B. bei langzeitigen Arbeitspausen ohne Dampfentnahme bei eingeschalteter Heizung, durch eine Heizungssteuerung der maximale zulässige Kesselbetriebsdruck nicht überschritten wird und ein Austritt von Dampf durch die Überdrucksicherung 11 vermieden wird. Der Vorteil besteht in der Vermeidung von Energieverlusten und Unfallgefahren durch unerwartet austretenden Dampf.

Neuerungsgemäß wird diese Aufgabe dadurch gelöst, daß durch einen Drucksensor 4 der Kesselinnendruck ständig erfaßt wird und unmittelbar vor Erreichen des maximal zulässigen Betriebsdruckes duch das Signal des Drucksensors 4 die Energiezufuhr für das oder die Heizelemente 2,2a,2b abgeschaltet wird.

Ein weiterer neuerungsgemäßer Vorteil besteht darin, daß der Dampferzeuger eine Ablaßeinrichtung enthält, die die Ablagerung von im Wasser enthaltenen Fremdstoffen an den Kesselinnenflächen und dem Heizelement stark vermindert und die Unfallgefahr durch direkt austretendes Ablaßwasser vermeidet.

Am Bedienfeld 14 ist eine optische Anzeige, in dieser Ausgestaltung in Form einer gelben oder orangen Diode, angebracht, die den Benutzer auf ein nötiges Entkalken hinweist.

Bei der hier vorliegenden Ausführungsform soll der Entkalkungsvorgang etwa alle 200 Betriebsstunden oder alle 6000 Pumpvorgänge vorgenommen werden.

Diese Zeitspanne kann durch die Verwendung eines Wasserkatalysators (Filter) verlängert werden, der an einer geeigneten Stelle im Zulauf- und Speichersystem angebracht wird.

Zusätzlich ist ein Ablaßventil 8 mit einer zugehörigen Auffangeinrichtung 9 vorgesehen. Über das Ventil 8 kann der Inhalt des Druckkessels 1 nach dem Abschalten des Geräts in die Auffangeinrichtung 9 geleitet werden. Dabei werden eventuelle Rückstände, die noch im Druckkessel 1 enthalten sind, ebenfalls aus dem Druckkessel 1 herausgeleitet. Dadurch lassen sich die Entkalkungsintervalle verlängern.

Ferner liegt der Neuerung die Aufgabe zugrunde, mit einfachen Mitteln einen Unterdruckausgleich durch Luftzufuhr zu gewährleisten und die eben bereits aufgeführten Nachteile von Dampferzeugern ohne automatischen Unterdruckausgleich zu vermeiden.

Neuerungsgemäß wird diese Aufgabe dadurch gelöst, daß in die Wasserzufuhrleitung ein Unterdruckventil 7 geschaltet wird, das bereits bei geringem Kesselunterdruck die Leitung zur freien Atmosphäre öffnet und die Zufuhr von Luft aus dem umgebenden Raum solange freigibt bis der Druckausgleich hergestellt ist. In einer bevorzugten Ausführung wird das Unterdruckventil unmittelbar vor den Kessel in die Wasserzufuhrleitung geschaltet, damit auch beim Abkühlen des Kessels nach dem Ausschalten des Dampferzeugers und ohne Betätigung des Sumpfablaßventils kein zusätzliches Speisewasser in den Kessel fließt und kein Ansteigen des Füllstandes über den Sollwert erfolgen kann.

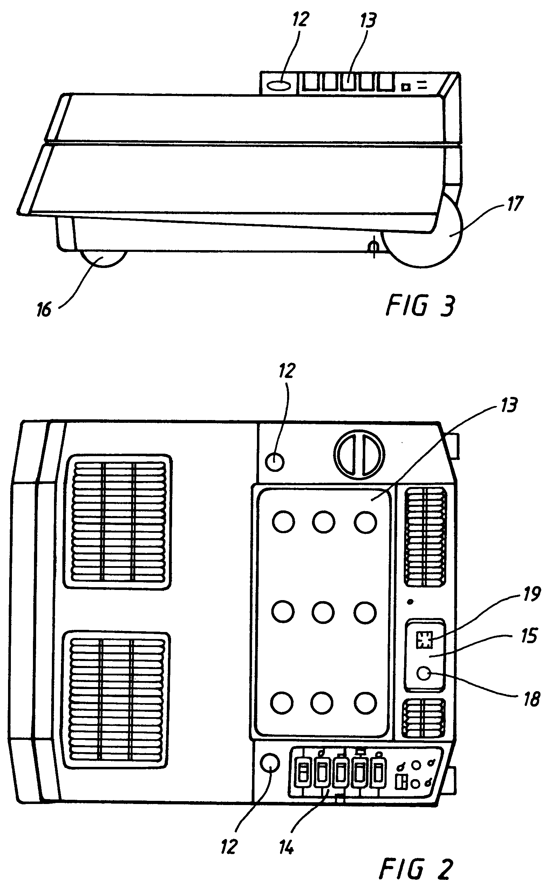

Figur 2 zeigt die schematische Draufsicht eines erfindungsgemäßen Dampferzeugers. Deutlich ist die Ablagefläche 13, die auf der Oberfläche des Gerätes angebracht ist, zu erkennen. Seitlich von der Ablagefläche sind zwei Druckknöpfe 12 angebracht, die zur Ver- bzw. Entriegelung der Befestigungseinrichtung dienen. Die Aussparungen sind in dieser Darstellung nicht dargestellt.

Im weiteren ist das Bedienfeld 14 schematisch dargestellt sowie die Anschlußvorrichtungen 15 im wesentlichen bestehend auf Schlauchtülle 18 und elektrischem Stecker 19, mit denen die Verbindung zu den Endverbrauchern oder zum externen Tank erfolgt.

Dabei wird die Handhabung der Endverbraucher dadurch erleichert, daß am erfindungsgemäßen Dampferzeuger nicht nur ein Dampfanschluß, sondern auch ein elektrischer Anschluß zur Versorgung der Endverbraucher vorgesehen ist. Ein mühsames Anschließen der Endverbraucher an 2 räumlich getrennten Punkten - Dampf, Strom - mit erschwerter Handhabung entfällt.

Figur 3 zeigt eine schematische Ansicht desselben Gerätes. An der Unterseite des Gehäuses sind Räder 17 bzw. Kugeln 16 vorgesehen, die eine gute Verschiebbarkeit des Gerätes auf ebenen Flächen gewährleisten.

Durch die vorliegende Erfindung gelingt es erstmals, eine zuverlässige und qualitativ hochwertige Dampfversorgung mit einer kleinen, leicht handhabbaren Einheit zu erreichen.

### Zeichnungslegende

- 1: Druckkessel
- 2: Heizelement
- 3: Heizungssteuerung
- 4: Drucksensor
- 5: Nachfüllventil
- 6: Füllstandssensor
- 7: Unterdruckventil
- 8: Ablaßventil
- 9: Auffangeinrichtung
- 10: Auslaßventil
- 11: Überdruckventil
- 12: Druckknopf
- 13: Ablagefläche
- 14: Bedienfeld
- 15: Anschlußvorrichtungen
- 16: Rad
- 17: Kugel
- 18: Schlauchtülle
- 19: elektrischer Stecker

## Patentansprüche

1. Kombinierbares Dampferzeugungsgerät, vorzugsweise für Bügeleinrichtungen und Reinigungsgeräte, für den professionellen und nicht professionellen Gebrauch mit einem Druckkessel (1) mit einem ein- oder angebauten Heizelement (2), einer Nachfülleinrichtung (5,6), einer Unterdrucksicherung (7), einer Ablaßeinrichtung (8,9), einem Einstellventil (10) für den austretenden Dampfstrom und mit einer Überdrucksicherung (11), **dadurch gekennzeichnet**, daß das Heizelement (2) eine spezielle Widerstands-Temperatur-Charakteristik aufweist, die dem Dampferzeugungsgerät selbstregelnde Eigenschaften verleiht, die den Druck und die Temperatur des erzeugten Dampfes weitgehend unabhängig von der abschließenden Dampfmenge, von der Temperatur des zugeführten Wassers und von der Versorgungsspannung des Heizelementes erhalten, und daß am Dampferzeugungsgerät eine oder mehrere Befestigungseinrichtungen vorgesehen sind.

2. Dampferzeuger nach Anspruch 1 mit einer Nachfülleinrichtung, die selbstregelnde Eigenschaften aufweist, mit einem Füllstandssensor (6) und einem Unterdruckventil (7), **dadurch gekennzeichnet**, daß die Nachfüllung (5) mit einer Druckpumpe kombiniert oder als Druckpumpe ausgebildet ist.

3. Dampferzeuger nach Anspruch 2, **dadurch gekennzeichnet,** daß die Nachfüllung (5) mit einem Unterdruckventil (7) kombiniert oder mit einer Unterdruckventilfunktion ausgebildet ist, die bei Unterdruck im Kessel den Druckausgleich durch die Zufuhr von Luft herstellt.

4. Dampferzeuger nach einem der Ansprüche 1 bis 3 mit einem Drucksensor (4), mit einer Heizungssteuerung (3) und mit einem Heizelement (2), die in ihrem Zusammenwirken eine Regeleinrichtung für die zugeführte Heizenergie bilden, **dadurch gekennzeichnet**, daß der Drucksensor (4) den Kesselinnendruck erfaßt und mit der Heizungssteuerung (3) so korrespondiert, daß der zulässige Kesselbetriebsdruck nicht überschritten wird.

5. Dampferzeuger nach einem der Ansprüche 1 bis 4 **dadurch gekennzeichnet**, daß eine Ablaßschraube für einen Entkalkungsprozess vorgesehen ist, verbunden mit einem Spülprogramm, welches mittels eines Tasters im Bedienfeld betätigt wird.

6. Dampferzeuger nach einem der Ansprüche 1 - 5, **dadurch gekennzeichnet**, daß die Befestigungseinrichtung in Form von geometrisch definierten Anschlußflächen ausgebildet ist, die eine flächenhafte Verbindung zum Gegenstück der Befestigungseinrichtung herstellt.

7. Dampferzeuger nach einem der Ansprüche 1 - 6, **dadurch gekennzeichnet**, daß die Befestigungseinrichtung aus mindestens zwei Aussparungen im Gehäuse des Dampferzeugers besteht.

8. Dampferzeuger nach Anspruch 7, **dadurch gekennzeichnet**, daß eine in die Oberseite des Gehäuses des Dampferzeugers integrierte Ablage für Anschlußgeräte vorgesehen ist.

9. Dampferzeuger nach einem der Ansprüche 7 oder 8, **dadurch gekennzeichnet**, daß eine Ablage für Anschlußgeräte vorgesehen ist, die in angebrachtem Zustand die Oberfläche des Dampferzeugers nicht überdeckt.

10. Dampferzeuger nach einem der Ansprüche 7 - 9, **dadurch gekennzeichnet**, daß zu Sicherungszwecken mindestens ein Teil der Befestigungseinrichtung verriegelbar ist.

11. Dampferzeuger nach Anspruch 10, **dadurch gekennzeichnet**, daß die Verriegelung über Druckknöpfe erfolgt, die selbsttägig bei der Installation des Dampferzeugers in entsprechende Aufnahmelaschen in den Gegenstücken der Befestigungseinrichtung einrasten.

12. Dampferzeuger nach einem der Ansprüche 1 - 11, **dadurch gekennzeichnet**, daß an der Unterseite des Gehäuses Einrichtungen zum Verschieben bzw. Ziehen des Dampferzeugers auf einer Auflagefläche vorgesehen sind.

13. Dampferzeuger nach einem der Ansprüche 1 - 12, **dadurch gekennzeichnet**, daß ein externer Tank zum Speichern von Wasser vorgesehen ist, der über eine passende Verbindung an den Dampferzeuger gekoppelt ist.

14. Dampferzeuger nach einem der Ansprüche 1 - 13, **dadurch gekennzeichnet**, daß am Gehäuse des Dampferzeugers Anschlüsse zur Versorgung weiterer Geräte mit Dampf und Strom vorhanden sind.

15. Dampferzeuger nach einem der Ansprüche 1 bis 14, **dadurch gekennzeichnet**, daß die Ablaßeinrichtung (8,9) als Sumpfablaßeinrichtung mit einem Sumpfablaßventil und einer Sumpfauffangeinrichtung ausgebildet ist, wobei das Sumpfablaßventil fernbetätigbar ist und die Sumpfauffangeinrichtung einen Schmutzwasserfilter enthält, der vorzugsweise auswechselbar ist.

16. Dampferzeuger nach Anspruch 15, **dadurch gekennzeichnet**, daß das Sumpfablaßventil fernbetätigbar ist und die Sumpfauffangeinrichtung als Kondensiereinrichtung ausgebildet ist, die einen Schmutzwasserfilter enthält und Bestandteil eines drucklosen Wasservorratsbehälters ist oder mit einem drucklosen Wasservorratsbehälter wärmeleitend verbunden ist, wobei eine Leitung vorhanden, die zwischen der Kondensiereinrichtung und dem Speichertank im Gerät verläuft.
